# EUROPÄISCHE PATENTSCHRIFT

(11) **EP 0 919 471 B1**
(45) Veröffentlichungstag und Bekanntmachung des Hinweises auf die Patenterteilung: **10.11.2004**
(21) Anmeldenummer: 98121656.7
(22) Anmeldetag: 12.11.1998
(51) Int. Cl.: B65B 35/58, B65G 47/252, B65G 47/244

(54) **Vorrichtung zum Handhaben von Packungen**
Device for handling packages
Dispositif pour manipuler des emballages

(30) Priorität: 01.12.1997 DE 19753019
(43) Veröffentlichungstag der Anmeldung: 02.06.1999
(73) Patentinhaber: Focke & Co. (GmbH & Co. KG), 27283 Verden (DE)
(72) Erfinder: Focke, Heinz, 27283 Verden (DE); Mutschall, Hugo, 27308 Kirchlinteln (DE); Wolter, Frank, 27283 Verden (DE)
(74) Vertreter: Bolte, Erich, Dipl.-Ing.

(56) Entgegenhaltungen:
- EP-A- 0 103 104
- EP-A- 0 776 840
- DE-A- 1 800 258
- DE-A- 4 338 810
- GB-A- 865 077
- GB-A- 1 223 295
- US-A- 4 283 973
- US-A- 4 483 526
- US-A- 4 512 455
- US-A- 4 555 013

## Beschreibung

Die Erfindung betrifft eine Vorrichtung zum Handhaben von Packungen bei der Einführung derselben in einen offenen Behälter, z.B. Faltkarton, wobei die Packungen mit Abstand voneinander durch einen Packungsförderer einer Packstation zuführbar und in den Behälter einführbar sind.

Beim Verpacken, insbesondere von Einzel-Packungen in größere Behälter, wie Faltkartons, besteht häufig das Problem, die Einzelpackungen in einer bestimmten Relativstellung zu verpacken. Diese kann einerseits durch die Formate der Einzelpackungen wie auch des Faltkartons bedingt sein. Zum anderen kann es aber erforderlich sein, eine bestimmte Seite bzw. Fläche der Einzelpackungen in einer bestimmten Relativstellung zu präsentieren. So kann es beispielsweise erforderlich sein, im Bereich einer Seitenfläche oder Seitenwand der Einzelpackung vorhandene Etiketten, Beschriftungen oder dergleichen in einer nach oben gerichteten Position anzuordnen, wenn die Einzelpackungen in den Faltkarton gegeben werden.

Die Gegenstände bzw. Einzelpackungen kommen von einer Fertigungsvorrichtung, insbesondere einer Verpackungsmaschine und werden auf Packungsförderern einer Sammelstation bzw. einer Packstation zugeführt. In deren Bereich wird eine Gruppe von Einzelpackungen gesammelt und als Einheit in den Faltkarton oder dergleichen eingegeben.

In der US-A-4 483 526 ist eine Vorrichtung gezeigt, mit der in horizontaler Ebene geförderte Bücher oder Zeitschriften vor einer Stapelbildung um 180° und um eine vertikale Achse drehbar sind. Eine ähnliche Einrichtung zeigt die EP-A-0 103 104, hier als Teil einer Rotationsdruckmaschine und im Zusammenhang mit dem Fördern von Bogen oder Bogenpaketen.

Die DE-A-18 00 258 zeigt eine Vorrichtung zum Wenden von auf einem Förderer stehenden keramischen Formlingen, etwa glasierten Tassen. Gewendet wird um eine horizontale Drehachse. Beiderseits eines Formlings angeordnete Spannbacken erfassen den Formling. Die Spannbacken sind anhebbar. Das Drehen des Formlings erfolgt in Abhängigkeit von seinem Schwerpunkt, da er in einer labilen Position erfasst und angehoben und nach Erreichen einer stabilen Lage wieder abgesetzt wird. Eine Vorrichtung für eine sehr spezielle Handhabung von Videodiscs zeigt die US-A-4 512 455. Eine in horizontaler Ebene liegende Disc wird um 180° und um eine horizontale Achse gewendet. Hierzu sind seitliche Greifköpfe mit Greiffingern vorgesehen, die am Umfang der Disc klammerartig zupacken und so die Disc beim Wendevorgang halten. Schließlich zeigt die EP-A-0 776 840 eine Wendevorrichtung in einer Fördereinrichtung, mit der quaderförmige Formlinge während einer horizontalen Förderung um 90° gewendet werden können und zwar um eine horizontale Achse. Dabei wird ein einzelner Formling an seiner Unterseite erfasst und um 90° geschwenkt.

Der Erfindung liegt die Aufgabe zugrunde, Maßnahmen zu treffen, durch die gewährleistet ist, dass die Einzelpackungen in der erforderlichen Relativstellung in der Packstation zum Einführen in den Faltkarton oder zur anderweitigen Handhabung zur Verfügung stehen.

Zur Lösung dieser Aufgabe ist die erfindungsgemäße Vorrichtung durch folgende Merkmale gekennzeichnet:
a) der Packungsförderer führt durch eine Wendestation mit einem Vertikalwender, durch den die Packungen um eine horizontale Drehachse in eine packungsgerechte Relativstellung drehbar sind,
b) der Vertikalwender weist zwei seitliche, außerhalb der Bewegungsbahn der Packungen angeordnete, aufrechte Drehscheiben als Tragorgane auf, die kontinuierlich drehend angetrieben sind,
c) an den Drehscheiben sind einander zugekehrte, quer zur Förderrichtung ein- und ausfahrbare Seitenhalter angeordnet zum Erfassen je einer Packung an einander gegenüberliegenden seitwärts gerichteten Packungsflächen,
d) die Seitenhalter sind während der Drehbewegung der Drehscheiben relativ zu diesen um eine Achse parallel zur Drehachse der Drehscheiben drehbar, derart, dass die durch die Seitenhalter erfasste Packung während des Transports durch die Drehscheiben um 90° drehbar ist,
e) die durch die Seitenhalter erfasste Packung ist durch die Drehbewegung des Vertikalwenders vom Packungsförderer abhebbar, in Förderrichtung transportierbar und nach Drehung auf dem Packungsförderer absetzbar.

Erfindungsgemäß findet demnach das Ausrichten der Einzelpackungen während des Transports derselben im Bereich des bzw. der Packungsförderer statt.

Weitere Merkmale der Erfindung betreffen die Ausgestaltung des Vertikalwenders.

Die erfindungsgemäße Vorrichtung zum Handhaben der (Einzel-) Packungen besteht aus mindestens einem Packungsförderer zum Transport einzelner, nacheinander angelieferter Einzelpackungen, wobei im Bereich des Packungsförderers eine oder mehrere Wendestationen für jeweils eine Packung angeordnet ist. Eine Besonderheit der Wendestationen besteht darin, daß die Einzelpackungen jeweils durch Halteorgane kraftschlüssig oder formschlüssig während der Drehbewegung erfaßt werden. Alternativ oder zusätzlich können die Einzelpackungen im Bereich der Wendestationen durch mit Saugluft beaufschlagte Halteorgane erfaßt werden. Dadurch ist eine korrekte Dreh- bzw. Wendebewegung bei hoher Arbeitsgeschwindigkeit möglich.

Weitere Einzelheiten der Erfindung beziehen sich auf Verfahrensschritte bei der Handhabung der (Einzel-)Packungen sowie auf Einzelheiten der Vorrichtung, insbesondere der Wendestationen.

Ein Ausführungsbeispiel der Vorrichtung wird nachfolgend anhand der Zeichnungen näher erläutert. Es zeigt:

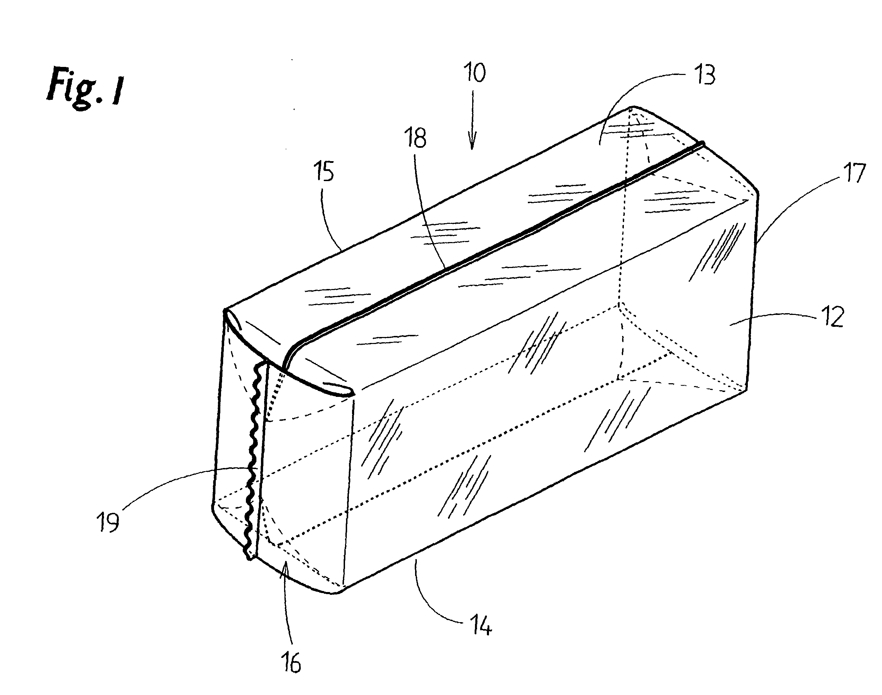

- Fig. 1: eine Folien-Weichpackung in perspektivischer Darstellung als Beispiel für einen zu handhabenden Gegenstand,

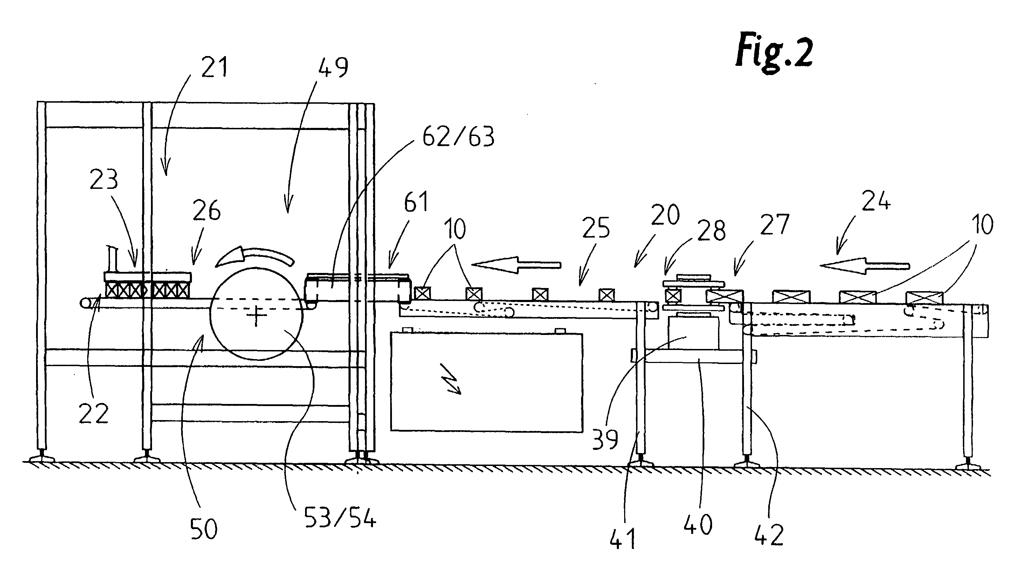

- Fig. 2: eine Vorrichtung zum Transport und Wenden von Einzelpackungen in schematischer Seitenansicht,

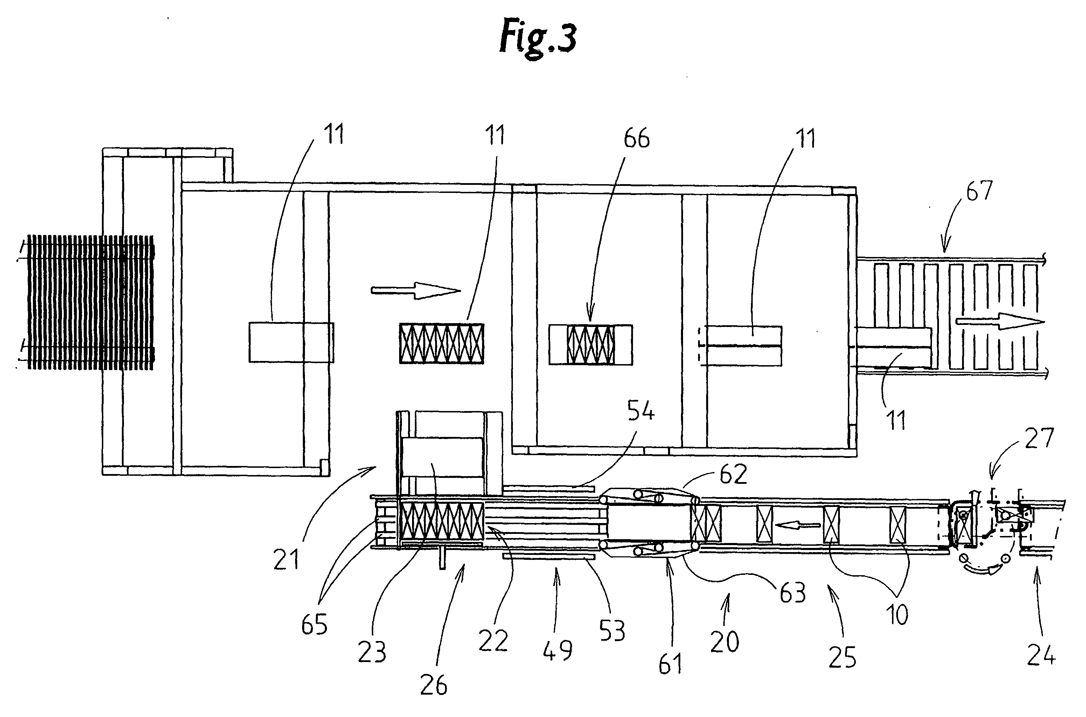

- Fig. 3: die Vorrichtung gemäß Fig. 2 in Draufsicht,

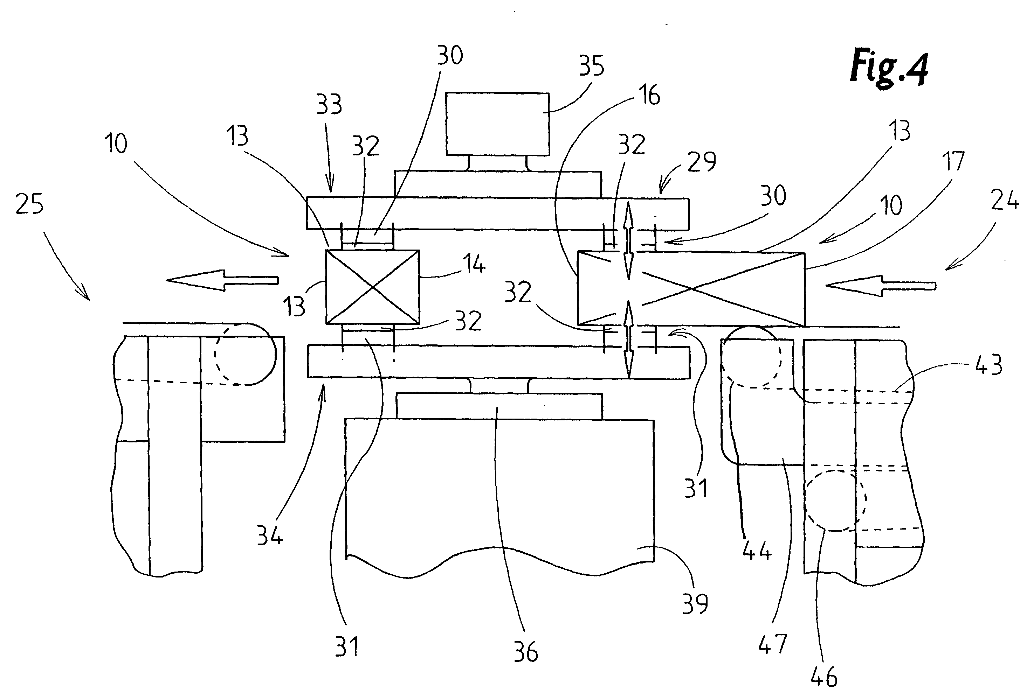

- Fig. 4: eine Einzelheit, nämlich eine Wendestation für Einzelpackungen in schematischer Seitenansicht,
- Fig. 5: die Wendestation gemäß Fig. 4 in Draufsicht,
- Fig. 6: die Wendestation gemäß Fig. 4 und 5 in Seitenansicht bei veränderter Stellung von einzelnen Organen,
- Fig. 7: eine weitere Wendestation für Einzelpackungen in Seitenansicht,

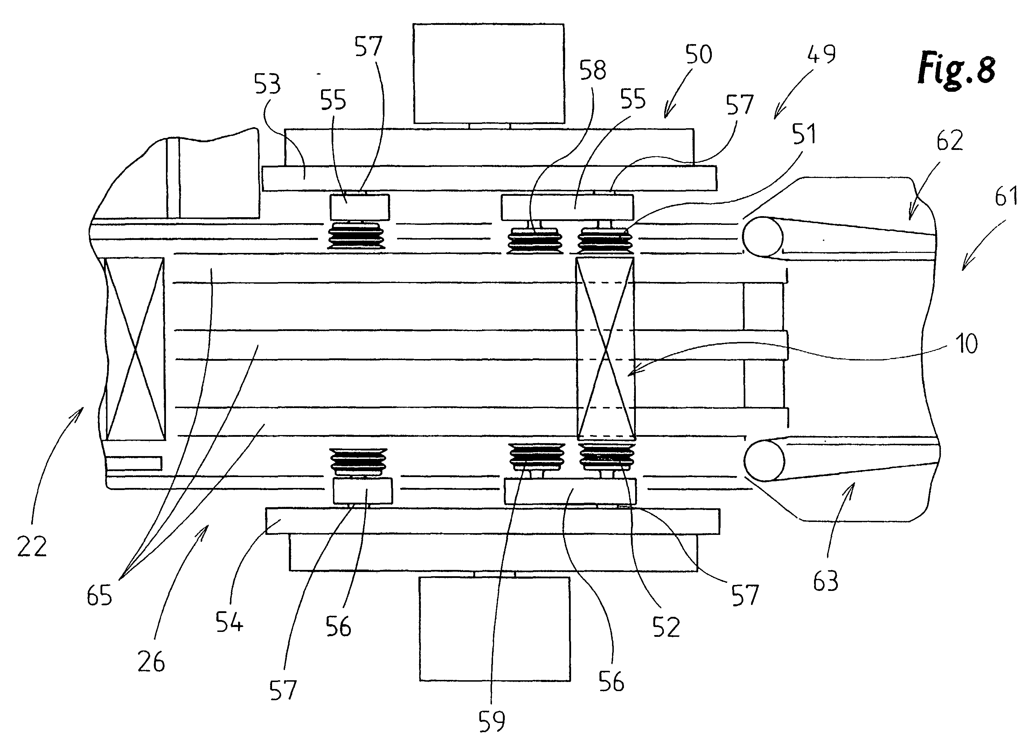

- Fig. 8: die Einzelheit gemäß Fig. 7 in Draufsicht.

Das vorliegende Ausführungsbeispiel bezieht sich auf die Handhabung einer (Folien-Weich-)Packung 10. Konkret geht es darum, die einzeln gefertigten bzw. einzeln zugeförderten Packungen 10 in einen Behälter zu verpacken, nämlich in einen Faltkarton 11. Die Packung 10 hat eine langgestreckte, quaderförmige Gestalt unter Bildung einer Vorderwand 12, einander gegenüberliegenden Seitenwänden 13 und 14, einer Rückwand 15 gegenüber der Vorderwand 12 und mit Stirnwand 16 und Bodenwand 17. Die Packung 10 weist eine Außenumhüllung auf aus einer dünnen Folie. Diese bildet im Bereich der Seitenwände 13 und 14 jeweils eine Längsnaht 18 zur Verbindung von Teilwänden der Folie. Im Bereich der Stirnwand 16 verläuft eine Verschlußnaht 19, die als Flossennaht gestaltet ist.

Die Packung 10 kann so ausgebildet sein, daß im Bereich einer bestimmten Wand, beispielsweise im Bereich der langgestreckten, rechteckigen Vorderwand 12 eine Bedruckung angeordnet oder innenseitig ein von außen erkennbares Etikett angebracht ist. Die Vorderwand 12 bildet in diesem Falle die Sichtseite der Packung 10.

Es geht darum, die in einer bestimmten Relativstellung ankommenden Packungen 10 so auszurichten, daß sie für die Einführung in den Faltkarton 11 geeignet sind. Des weiteren soll eine bestimmte Relativstellung der Packungen 10 gegeben sein, beispielsweise derart, daß die mit Beschriftung bzw. Etikett ausgestattete Vorderwand 12 nach oben gerichtet ist und demnach bei geöffnetem Karton sichtbar ist.

Die beispielsweise von einer Verpackungsmaschine (nicht gezeigt) kommenden Packungen 10 werden auf einem Packungsförderer 20 einer Packstation 21 zugeführt. In deren Bereich werden Packungsgruppen 22 gebildet aus einer Anzahl von Packungen 10, die mit ihrer Längserstreckung quer zur Förderrichtung weisen. Eine Packungsgruppe 22 wird als Einheit von einem Hubförderer 23 erfaßt und durch Quertransport dem Faltkarton 11 zugeführt sowie in diesen als eine Lage von Packungen 10 abgesenkt. Der Hubförderer 23 kann in geeigneter Weise ausgebildet sein, zum Beispiel nach Maßgabe der DE 196 54 041.0.

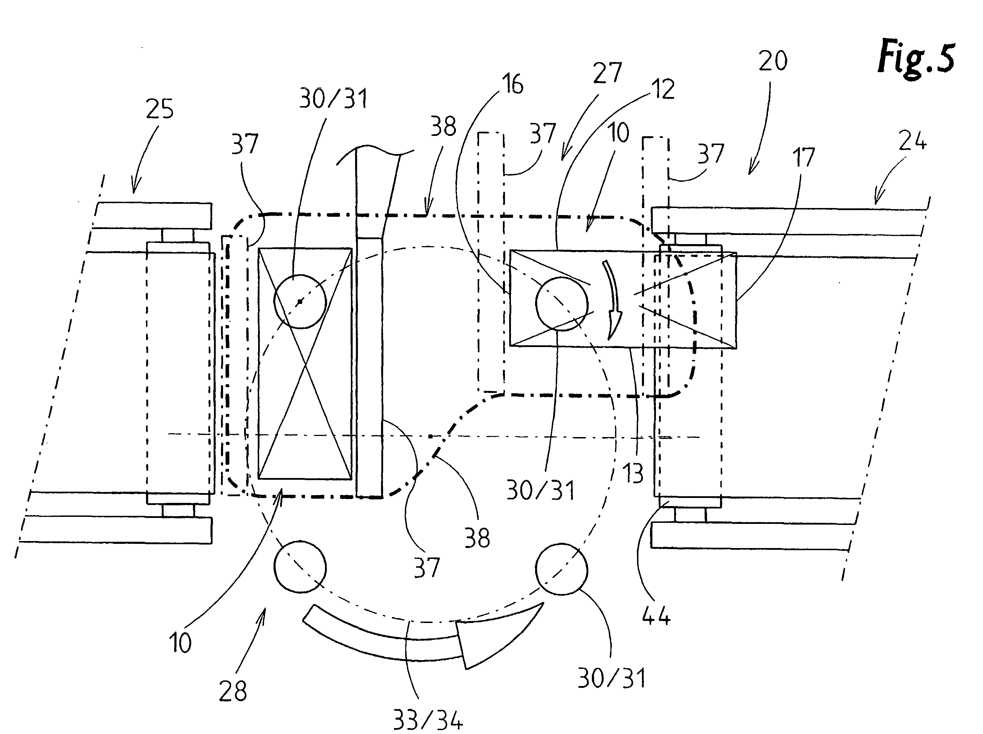

Der Packungsförderer 20 ist als Bandförderer ausgebildet und in mehrere, nämlich drei Bandabschnitte 24, 25, 26 unterteilt. Die Packungen 10 kommen - fertigungsbedingt - in einer bestimmten Relativstellung auf dem Packungsförderer 20, nämlich dem ersten Bandabschnitt 24, an. Die Packungen 10 sind in diesem Bereich mit ihrer Längserstreckung in Förderrichtung weisend positioniert, beispielsweise mit der Stirnwand 16 in Förderrichtung vornliegend. Die Packungen 10 liegen außerdem an einem Seitenrand des Bandabschnitts 24 (Fig. 5). In Förderrichtung haben die Packungen 10 (annähernd) gleiche Abstände voneinander.

Der erste Bandabschnitt 24 führt zu einer (ersten) Wendestation 27. Im Bereich derselben werden die Packungen 10 um eine Vertikalachse gedreht, derart, daß die Packungen 10 im Anschluß an die Wendestation 27 mit der Längserstreckung quer zur Förderrichtung weisen. In dieser Relativstellung werden die Packungen 10 - unter Aufrechterhaltung des Abstands - an den nächstfolgenden Bandabschnitt 25 übergeben.

Die Wendestation 27 weist einen Horizontalwender 28 auf, der die vom Bandabschnitt 24 zugeführten Packungen 10 erfaßt, längs einer teilkreisförmigen Bahn transportiert und dabei um 90° wendet. Der Horizontalwender 28 weist mehrere längs eines Kreisbogens bewegte Packungshalter 29 auf. Diese erfassen die ankommende Packung 10 im wesentlichen kraftschlüssig, nämlich durch obere und untere Haltebacken 30, 31 an Oberseite und Unterseite der Packung 10. Diese können während dieser Phase mit den Seitenwänden 13 und 14 nach oben und unten gerichtet sein, so daß die Haltebacken 30, 31 an diesen Seitenflächen 13, 14 anliegen. Die Haltebacken 30, 31 weisen im Bereich von Anlageflächen an den Packungen 10 eine elastische Auflage 32 auf. Die Haltebacken 30, 31 sind in Richtung zu den Packungen 10 und zur Freigabe derselben entgegengesetzt bewegbar, im vorliegenden Falle in Aufwärts- und Abwärtsrichtung. Die Packungen 10 werden demnach zwischen den Haltebacken 30, 31 eingeklemmt.

Die Haltebacken 30, 31 sind an drehbaren Tragorganen angebracht, nämlich an einer oberen und unteren Tragscheibe 33, 34. An der oberen Tragscheibe 33 sind obere Haltebacken 30 und an der unteren Tragscheibe 44 sind nach oben gerichtete untere Haltebacken 31 angeordnet. Jede Haltebacken 30, 31 ist relativ zur Tragscheibe 33, 34 auf- und abbewegbar. Bei dem gezeigten Ausführungsbeispiel sind vier Haltebacken 30, 31 längs des Umfangs der Tragscheiben 33, 34 einander gegenüberliegend positioniert. Die Tragscheiben 33, 34 sind in einem oberen Drehlager 35 und in einem unteren Drehlager 36 drehbar gelagert und vorzugsweise kontinuierlich angetrieben.

Die Bewegung des Horizontalwenders 28 einerseits und der Packungen 10 andererseits ist so aufeinander abgestimmt, daß im Bereich der Bewegungsbahn einer ankommenden Packung 10, also in einem randseitigen Bereich des Bandabschnitts 24, ein Packungs halter 29 bereitgehalten ist bei auseinanderbewegten Haltebacken 30, 31. Die Packung 10 wird durch den Bandabschnitt 24 in die Position zwischen den Haltebacken 30, 31 eingefahren. Diese werden in die Schließstellung bewegt, wenn ein in Transportrichtung vorderer, außermittiger Bereich der Packung 10 erfaßt werden kann (Fig. 5). Der Horizontalwender 28 wird im Gegenuhrzeigersinn gedreht. Die Packungshalter 29 führen eine gegenläufige Bewegung aus, werden nämlich im Uhrzeigersinn gedreht. Hierdurch ergibt sich eine Bewegungsbahn, die die Packung 10 von dem Bandabschnitt 24 zu dem mit Abstand hiervon angeordneten Bandabschnitt 25 transportiert und dabei zugleich um 90° wendet. Die Packungen 10 sind am Ende des Förder- und Wendevorgangs des Horizontalwenders 28 exakt auf den Bandabschnitt 25 ausgerichtet, und zwar mit der Längserstreckung quer zur Förderrichtung. Bei Übergabe einer auf diese Weise bewegten Packung 10 an den Bandabschnitt 25 befindet sich der nächstfolgende Packungshalter 29 in Aufnahmestellung für eine nachfolgende Packung 10.

Dem Horizontalwender 28 ist ein weiteres Hilfsorgan mit mehrfacher Funktion zugeordnet. Es handelt sich dabei um einen Betätigungsarm 37, der im Bereich der Bewegungsebene der Packungen 10 wirksam ist. Der Betätigungsarm 37 ist außerhalb der Wendestation 27 positioniert und im vorliegenden Falle ausschließlich translatorisch, also unter Aufrechterhaltung einer quer zur Förderrichtung der Packungen 10 gerichteten Querstellung hin- und herbewegbar. Der Betätigungsarm 37 wird dabei längs einer Bewegungsbahn 38 bewegt, die als strichpunktierte Linie dargestellt ist und den Bewegungsverlauf eines freien Endes des Betätigungsarms 37 darstellt. Der Betätigungsarm 37 ist als Hilfsorgan mit den erläuterten Funktionen nur als symbolische Darstellung zu verstehen. In der Praxis können ggf. mehrere hinsichtlich ihrer Bewegung aufeinander abgestimmte Betätigungsarme oder andere entsprechend bewegte Organe vorgesehen sein.

In einer Ausgangsstellung - rechts in Fig. 5 - dient der Betätigungsarm 37 als Anschlag für eine ankommende Packung 10. Diese läuft beispielsweise mit der Stirnwand 16 gegen den Betätigungsarm 37. Dadurch wird die exakte Relativstellung auf den jeweils aufnahmebereiten Packungshalter 29 gewährleistet.

Der Betätigungsarm 37 wird dann mit der Packung 10 in Transportrichtung bewegt, wobei der Betätigungsarm 37 weiterhin als Anschlag dient und in einer mittleren Position (Fig. 5) die exakte Relativstellung einer Packung 10 im Bereich des Packungshalters 29, also zwischen den Haltebacken 30, 31, bestimmt.

Danach führt der Betätigungsarm 37 eine Bewegung in Förderrichtung aus und zugleich eine quergerichtete Verschiebung in die in Fig. 5 in durchgehenden Linien gezeigte Position. In dieser liegt der Betätigungsarm an einer in Förderrichtung rückseitigen Fläche einer davorliegenden Packung 10 an, beispielsweise an der Vorderwand 12 oder Rückwand 15. Der Betätigungsarm 37 wirkt in dieser Stellung als Schieber, der bei geöffnetem Packungshalter 29 die Packung 10 abschiebt vom Horizontalwender 28 auf den Bandabschnitt 25. Die Endstellung des Betätigungsarms 37 ist in Fig. 5 links strichpunktiert gekennzeichnet.

Der Betätigungsarm 37 führt nun entsprechend der Bewegungsbahn 38 in der Endstellung eine quergerichtete Bewegung durch, so daß das freie Ende des Betätigungsarms 37 außerhalb der Bewegungsbahn des Horizontalwenders 28 liegt. Der Betätigungsarm 37 kehrt nun in die Ausgangsstellung als Anlage für die nächste ankommende Packung 10 zurück.

Im Zusammenhang mit der Wendestation 27 ist eine weitere Besonderheit gezeigt, die auch bei anderen Wendestationen zum Einsatz kommen kann. Es geht darum, die Arbeitsweise der Wendestation 27 bzw. des Horizontalwenders 28 (zeitweilig) außer Kraft zu setzen. Die auf dem Bandabschnitt 24 ankommenden Packungen 10 werden in diesem Falle ohne Veränderung der Relativstellung weitergefördert.

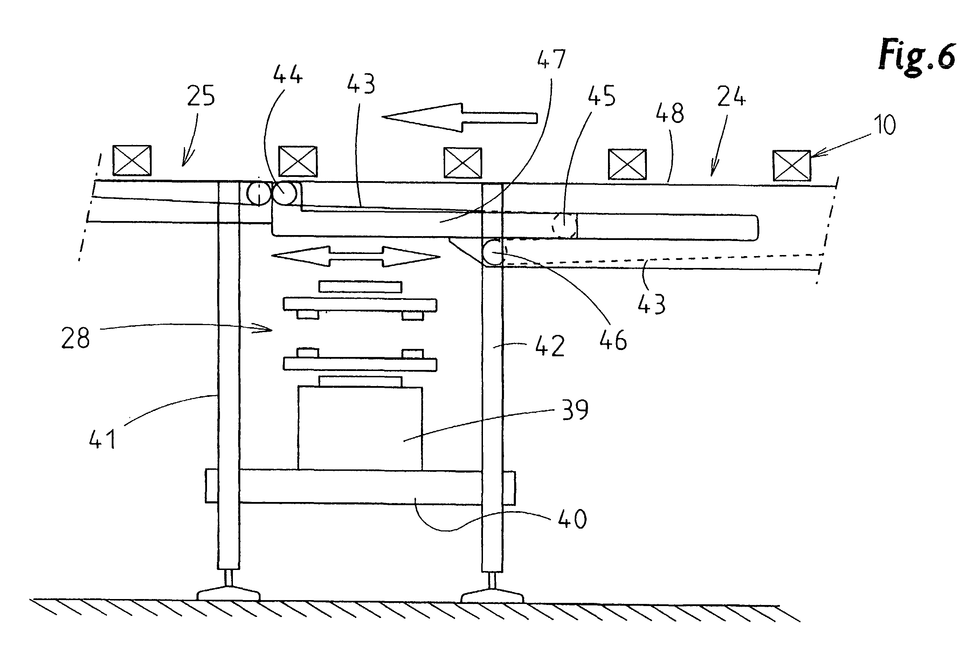

Zu diesem Zweck ist der Horizontalwender 28 aus der Bewegungsbahn der Packungen 10 zurückziehbar. Bei dem gezeigten Ausführungsbeispiel (insbesondere Fig. 6) ist der Horizontalwender 28 als Einheit absenkbar in eine Position unterhalb der Belegungsbahn der Packungen 10 bzw. unterhalb des Packungsförderers 20. Der Horizontalwender 28 bzw. ein diesem zugeordnetes Getriebe 39 ist auf einem auf- und abbewegbaren Träger angeordnet. Es handelt sich hier um eine quergerichtete Traverse 40. Diese ist an Führungen auf- und abbewegbar. Bei dem vorliegenden Ausführungsbeispiel dienen aufrechte Stützen 41, 42 einer Tragvorrichtung als aufrechte Halterung und Führung für die Traverse 40.

Eine weitere Besonderheit besteht darin, daß in der abgesenkten Stellung des Horizontalwenders 28 die zwischen den Bandabschnitten 24 und 25 entstehende Lücke fördertechnisch überbrückt wird. Zu diesem Zweck ist der Bandabschnitt 24 teleskopartig ausfahrbar bis der Bandabschnitt 24 unmittelbar an den Bandabschnitt 25 anschließt. Zu diesem Zweck ist ein Untergurt 43 des Bandabschnitts 24 schleifenförmig geführt, nämlich über eine Endwalze 44, eine Zwischenwalze 45 und eine untere Umlenkwalze 46. Diese - die Umlenkwalze 46 - ist feststehend positionniert, beispielsweise an der Stütze 42. Die Endwalze 44 und die Zwischenwalze 45 sind ein- und ausfahrbar unter Veränderung der Form und Größe der durch den Untergurt 43 gebildeten Schleife. Die beiden Walzen 44 und 45 sind zu diesem Zweck an einem schlittenartigen, gemeinsamen Träger 47 angeordnet. Dieser ist hier winkelförmig ausgebildet. Die Endwalze 44 ist an einem nach oben gerichteten Schenkel des Trägers 47 angebracht, so daß im Bereich eines Obertrums 48 Bandabschnitt 24 und Bandabschnitt 25 in einer gemeinsamen Ebene verlaufen. Zur Überbrückung der Lücke wird der Träger 47 unter Mitnahme der Walzen 44 und 45 in Richtung auf den Bandabschnitt 25 ausgefahren. Dadurch wird der Obertrum 48 entsprechend verlängert bis der Bandabschnitt 24 an den Bandabschnitt 25 anschließt.

Eine weitere Wendestation 49 ist im Bereich des Bandabschnitts 26 vorgesehen. Diese Wendestation 49 ist mit einem Vertikalwender 50 ausgestattet. Aufgabe der Wendestation 49 bzw. des Vertikalwenders 50 ist eine weitere Veränderung der Relativstellung der Packung 10. Diese wird um die eigene Längsachse gedreht, derart, daß beispielsweise die während des vorangehenden Transports nach oben und unten gerichtete Längsnaht 18 seitwärtsgerichtet und die beispielsweise mit einer Bedruckung oder dergleichen versehene Vorderwand 12 nach oben weist.

Zu diesem Zweck werden die ankommenden Packungen 10 im Bereich des Bandabschnitts 26 an den seitwärtsgerichteten Flächen, also an Stirnwand 16 und Bodenwand 17, erfaßt und um 90° gedreht, und zwar um eine quer zur Förderrichtung weisende Drehachse. Zugleich werden dabei die Packungen 10 von einer Aufnahmeposition in eine Absetzposition durch den Vertikalwender 50 gefördert.

Die ankommenden Packungen 10 werden durch paarweise angeordnete Seitenhalter 51, 52 an einander gegenüberliegenden Seiten - Stirnwand 16, Bodenwand 17 - erfaßt und gedreht. Die Seitenhalter 51, 52 sind als Saugorgane ausgerüstet und darüber hinaus in Richtung zur Packung 10 sowie entgegengesetzt ein- und ausfahrbar. Zum Erfassen einer Packung 10 werden die beiden einander gegenüberliegenden Seitenhalter 51, 52 ausgefahren bis zur Anlage an den zugekehrten Packungsflächen. Auf die Seitenhalter 51, 52 bzw. auf den Packungen zugekehrte Anlageflächen wird Saugwirkung ausgeübt, so daß die Packungen 10 einerseits zwischen den Seitenhaltern 51, 52 eingeklemmt sind - mit geringem Druck -, andererseits aber auch durch Ansaugen an den Seitenhaltern 51, 52 fixiert sind. Die Seitenhalter 51, 52 sind zur nachgiebigen Anlage an den beispielsweise weichen Packungen 10 als Faltenbalg, also elastisch nachgiebig, ausgebildet.

Die Halteorgane für die Packungen 10 im Bereich des Vertikalwenders 50, also die Seitenhalter 51, 52, sind an seitlichen, aufrechten Tragorganen angebracht, und zwar an aufrechten Drehscheiben 53, 54. Diese sind kreisförmig ausgebildet und seitlich neben der Bewegungsbahn der Packungen bzw. neben dem Bandabschnitt 26 gelagert und vorzugsweise kontinuierlich drehend angetrieben. Die Seitenhalter 51, 52 sind mittelbar an den Drehscheiben 53, 54 befestigt, nämlich über Tragorgane, und zwar Traghebel 55, 56. Diese sind drehbar an der jeweiligen Drehscheibe 53, 54 gelagert.

Beim vorliegenden Ausführungsbeispiel sind die langgestreckten, rechteckigen Traghebel 55, 56 mit einem außermittig, also versetzt angeordneten Drehlager 57 an der Drehscheibe 53, 54 gelagert. Des weiteren ist jeweils ein weiterer Seitenhalter 58, 59 an jedem Traghebel 55, 56 gelagert. Jeweils einer der Seitenhalter 51, 52 ist im Bereich des Drehlagers 57 des Traghebels 55, 56 angebracht. Die anderen Seitenhalter 58, 59 sind hierzu versetzt positioniert, also mit Abstand vom Drehlager 57. Die zusätzlichen bzw. zweiten Seitenhalter 58, 59 kommen zum Einsatz bei entsprechend breit gestalteten Packungen oder bei großformatigen Packungen, die nicht durch jeweils einen Seitenhalter 51, 52 allein erfaßt werden können.

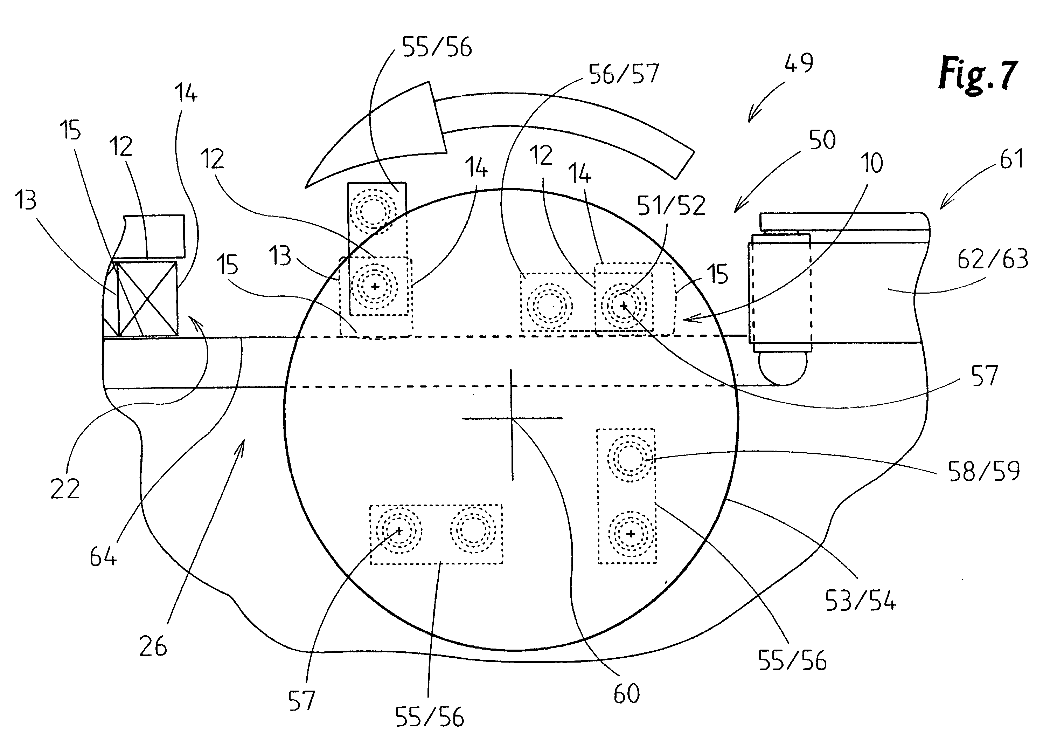

Die Drehscheiben 53, 54 werden gemäß Fig. 7 im Gegenuhrzeigersinn gedreht. Eine Drehachse 60 der beiden Drehscheiben 53, 54 liegt unterhalb des Förderers für die Packungen 10, also unterhalb des Bandabschnitts 26. Seitenhalter 51, 52 im oberen Teil der Drehscheiben 53, 54 erfassen eine zugeführte Packung 10 an den seitwärtsgerichteten Flächen. Bei Weiterbewegung der Drehscheiben 53, 54 werden durch entsprechenden Antrieb - zum Beispiel Planetenradgetriebe - die Traghebel 55, 56 und damit die Seitenhalter 51, 52 im Uhrzeigersinn relativ zu den Drehscheiben 53, 54 gedreht. Die Bewegungen sind so aufeinander abgestimmt, daß eine ursprünglich in Förderrichtung rückwärtigerichtete Packungsfläche, zum Beispiel eine Rückwand 15, nach unten weist und an dem Bandabschnitt 26 anliegt, während die ursprünglich nach vorn gerichtete Vorderwand 12 nach oben weist. In dieser Relativstellung werden die Packungen 10 einer Sammelstation zugeführt, in der die Packungsgruppe 22 aus mehreren nebeneinanderliegenden Packungen 10, jeweils mit der Vorderwand 12 nach oben gerichtet, gebildet wird. Diese Packungsgruppe 22 wird dann in den Faltkarton 11 eingeführt.

Die Packungen 10 werden vor der Übergabe an die Wendestation 49 bzw. an den Vertikalwender 50 so gesteuert, daß eine zeitgenaue Übergabe einer Packung 10 an Seitenhalter 51, 52 erfolgen kann. Zu diesem Zweck ist der Wendestation 49 eine Staustation vorgeordnet. In deren Bereich werden die Packungen kurzzeitig angehalten bzw. in Dichtlage gesammelt. Die jeweils vordere Packung 10 wird in Abstimmung mit dem Vertikalwender 50 freigegeben. Als Stauorgan ist ein Stauförderer 61 vorgesehen, der aus zwei seitlichen Förderbändern 62, 63 besteht. Diese bzw. deren den Packungen 10 zugekehrte Fördertrums werden mit etwas geringerer Geschwindigkeit angetrieben als der vorhergehende Förderer, also als der Bandabschnitt 25. Dadurch werden die Packungen 10 in Dichtlage angesammelt. Die Packungen werden von dem Stauförderer 61 einzeln an den Bandabschnitt 26 übergeben.

Eine weitere Besonderheit besteht darin, daß der Bandabschnitt 26 als Saugförderer ausgebildet ist. Die Packungen 10 werden im Bereich des Bandabschnitts 26 durch Saugkraft bzw. Unterdruck an einen oberen Fördertrum 64 angesaugt. Weiterhin besteht der Bandabschnitt 26 aus mehreren nebeneinanderliegenden Einzelgurten 65. Vorzugsweise ist jeder Einzelgurt 65 als Saugband ausgebildet mit einem unterhalb der Fördertrums 64 angeordneten Saugkasten (nicht gezeigt), der Saugluft über die luftdurchlässig ausgebildeten Fördertrums 64 zieht. Die Packungen 10 werden so präzise auf dem Bandabschnitt 26 gehalten. Im Bereich der Packungsgruppe 22 laufen die Einzelgurte 65 schlupfend unterhalb der angestauten Packungen 10 weiter.

Die gesamte Vorrichtung, einschließlich der beiden Wendestationen 27, 49 und der Organe derselben wird vorzugsweise kontinuierlich angetrieben. Die einzelnen Organe der Wendestationen sind hinsichtlich der Bewegungsabläufe aufeinander sowie auf die Förderbewegung der Packungen abgestimmt.

Die in beschriebener Weise mit den Packungsgruppen 22 gefüllten Faltkartons 11 werden auf einer Kartonbahn 66 parallel zu den Bandabschnitten 24, 25, 26 transportiert, und zwar in entgegengesetzter Richtung. Nach dem Schließen der Faltkartons 11 werden diese an eine Rollenbahn 67 übergeben, die die kompletten, geschlossenen Faltkartons 11 beispielsweise zu einer Palettierstation fördert.

## Patentansprüche

1. Vorrichtung zum Handhaben von Packungen bei der Einführung derselben in einen offenen Behälter, z.B. Faltkarton (11), wobei die Packungen (10) mit Abstand voneinander durch einen Packungsförderer (20) einer Packstation (21) zuführbar und in den Behälter (11) einführbar sind, **gekennzeichnet durch** folgende Merkmale:
a) der Packungsförderer (20)führt **durch** eine Wendestation (49) mit einem Vertikalwender (50), **durch** den die Packungen (10) um eine horizontale Drehachse in eine packungsgerechte Relativstellung drehbar sind,
b) der Vertikalwender (50) weist zwei seitliche, außerhalb der Bewegungsbahn der Packungen (10) angeordnete, aufrechte Drehscheiben (53, 54) als Tragorgane auf, die kontinuierlich drehend angetrieben sind,
c) an den Drehscheiben (53, 54) sind einander zugekehrte, quer zur Förderrichtung ein- und ausfahrbare Seitenhalter (51, 52, 58, 59) angeordnet zum Erfassen je einer Packung (10) an einander gegenüberliegenden seitwärts gerichteten Packungsflächen (16, 17),
d) die Seitenhalter (51, 52, 58, 59) sind während der Drehbewegung der Drehscheiben (53, 54) relativ zu diesen um eine Achse parallel zur Drehachse der Drehscheiben (53, 54) drehbar, derart, dass die **durch** die Seitenhalter (51, 52, 58, 59) erfasste Packung (10) während des Transports **durch** die Drehscheiben (53, 54) um 90° drehbar ist,
e) die **durch** die Seitenhalter (51, 52; 58, 59) erfasste Packung (10) ist **durch** die Drehbewegung des Vertikalwenders (50) vom Packungsförderer (20) abhebbar, in Förderrichtung transportierbar und nach Drehung auf dem Packungsförderer (20) absetzbar.

2. Vorrichtung nach Anspruch 1, **dadurch gekennzeichnet, dass** die Seitenhalter (51, 52; 58, 59) als Saugorgane ausgebildet sind und die Packungen (10) mittels Saugluft halten.

3. Vorrichtung nach Anspruch 1 oder 2, **dadurch gekennzeichnet, dass** die Seitenhalter (51, 52; 58, 59) unter elastischem Druck an den Packungen (10) anliegen.

4. Vorrichtung nach Anspruch 1 oder einem der weiteren Ansprüche, **dadurch gekennzeichnet, dass** die Seitenhalter (51, 52; 58, 59) an gesondert bewegbaren Tragorganen angeordnet sind, insbesondere an Traghebeln (55, 56), die schwenkbar an den Drehscheiben (53, 54) angebracht sind, wobei während der Drehung der Drehscheiben (53, 54) die Traghebel (55, 56) mit den Seitenhaltern (51, 52; 58, 59) eine gegenläufige Drehbewegung um 90° ausführen.

5. Vorrichtung nach Anspruch 4 oder einem der weiteren Ansprüche, **dadurch gekennzeichnet, dass** an jedem Traghebel (55, 56) zwei Seitenhalter (51, 58; 52, 59) angebracht sind zum gemeinsamen Erfassen von seitwärts gerichteten Packungsflächen (16, 17) entsprechender Größe.

6. Vorrichtung nach Anspruch 4 oder einem der weiteren Ansprüche, **dadurch gekennzeichnet, dass** die Traghebel (55, 56) mit einem außermittig angeordneten Drehlager (57) an den Drehscheiben (53, 54) gelagert sind.

## Claims

1. Apparatus for handling packs as the latter are introduced into an open container, e.g. folding carton (11), it being possible for the packs (10) to be fed to a packing station (21) at a distance from one another by a pack conveyor (20) and introduced into the container (11), **characterized by** the following features:
a) the pack conveyor (20) leads through a turning station (49) with a vertical turner (50), through which the packs (10) can be rotated about a horizontal axis of rotation into a relative position which is correct for the packaging operation,
b) the vertical turner (50) has two lateral, upright rotary discs (53, 54) as carrying elements, these discs being arranged outside the movement path of the packs (10) and being driven continuously in rotation,
c) mutually facing side retaining means (51, 52, 58, 59) which can be retracted and extended transversely with respect to the conveying direction are arranged on the rotary discs (53, 54) for the purpose of gripping in each case one pack (10) on mutually opposite sideways directed pack surfaces (16, 17),
d) during the rotary movement of the rotary discs (53, 54), the side retaining means (51, 52, 58, 59) can be rotated relative to these rotary discs about an axis parallel to the axis of rotation of the rotary discs (53, 54), such that the pack (10) gripped by the side retaining means (51, 52, 58, 59) can be rotated through 90° by the rotary discs (53, 54) during transportation,
e) the pack (10) gripped by the side retaining means (51, 52; 58, 59), as a result of the rotary movement of the vertical turner (50), can be raised off from the pack conveyor (20), transported in the conveying direction and, following rotation, set down on the pack conveyor (20).

2. Apparatus according to Claim 1, **characterized in that** the side retaining means (51, 52; 58, 59) are designed as suction elements and retain the packs (10) by means of suction air.

3. Apparatus according to Claim 1 or 2, **characterized in that** the side retaining means (51, 52; 58, 59) butt with elastic pressure against the packs (10).

4. Apparatus according to Claim 1 or one of the further claims, **characterized in that** the side retaining means (51, 52; 58, 59) are arranged on separately movable carrying elements, in particular on carrying levers (55, 56), which are provided pivotably on the rotary discs (53, 54), it being the case that, during rotation of the rotary discs (53, 54), the carrying levers (55, 56) with the side retaining means (51, 52; 58, 59) rotate through 90° in the opposite direction.

5. Apparatus according to Claim 4 or one of the further claims, **characterized in that** two side retaining means (51, 58; 52, 59) are provided on each carrying lever (55, 56) for the purpose of jointly gripping sideways directed pack surfaces (16, 17) of corresponding size.

6. Apparatus according to Claim 4 or one of the further claims, **characterized in that** the carrying levers (55, 56) are mounted on the rotary discs (53, 54) by way of an eccentrically arranged rotary bearing (57).

## Revendications

1. Dispositif pour manipuler des emballages lors de l'introduction de ceux-ci dans un récipient ouvert, par exemple une boîte en carton pliante (11), des emballages (10) pouvant être amenés à distance les uns des autres par l'intermédiaire d'un transporteur d'emballages (20) vers un poste de conditionnement (21) et introduits dans le récipient (11),
caractérisé comme suit :
a) le transporteur d'emballages (20) passe à travers un poste de retournement (49) avec un retoumeur vertical (50) par lequel les emballages (10) peuvent être tournés autour d'un axe de rotation horizontal dans une position relative de conditionnement,
b) le retourneur vertical (50) présente deux disques rotatifs (53, 54) verticaux disposés à l'extérieur de la trajectoire des emballages (10) et servant d'organes de support, qui sont continuellement entraînés en rotation,
c) aux disques rotatifs (53, 54) des appuis latéraux (51, 52, 58, 59) sont disposés les uns face aux autres, qui peuvent être rentrés et sortis transversalement à la direction de transport pour saisir respectivement un emballage (10) sur des surfaces d'emballage (16, 17) situées les unes en regard des autres et orientées latéralement,
d) pendant le mouvement de rotation des disques rotatifs (53, 54) les appuis latéraux (51, 52, 58, 59) sont pivotants par rapport à ceux-ci autour d'un axe parallèle à l'axe de rotation des disques rotatifs (53, 54), de telle sorte que l'emballage (10) saisi par les appuis latéraux (51, 52, 58, 59) peut être pivoté de 90° par les disques rotatifs (53, 54) pendant le transport,
e) l'emballage (10) saisi par les appuis latéraux (51, 52, 58, 59) peut être soulevé du transporteur d'emballages (20) par le mouvement de rotation du retourneur vertical (50), transporté dans la direction de transport et déposé sur le transporteur d'emballages (20) après rotation.

2. Dispositif selon la revendication 1,
**caractérisé en ce que** les appuis latéraux (51, 52 ; 58, 59) présentent la forme de ventouses et tiennent les emballages (10) au moyen d'air aspiré.

3. Dispositif selon la revendication 1 ou 2,
**caractérisé en ce que** les appuis latéraux (51, 52 ; 58, 59) sont placés contre les emballages (10) sous pression élastique.

4. Dispositif selon la revendication 1 ou l'une quelconque des autres revendications,
**caractérisé en ce que** les appuis latéraux (51, 52 ; 58, 59) sont disposés sur des organes de support mobiles de façon séparée, notamment sur des leviers de support (55, 56) montés de manière à pivoter sur les disques rotatifs (53, 54), pendant la rotation des disques rotatifs (53, 54) les leviers de support (55, 56) exécutant un mouvement de rotation de 90° contrarotatif par rapport aux appuis latéraux (51, 52 ; 58, 59).

5. Dispositif selon la revendication 4 ou l'une quelconque des autres revendications,
**caractérisé en ce qu'**à chaque levier de support (55, 56) deux appuis latéraux (51, 58 ; 52, 59) sont disposés pour saisir conjointement des surfaces d'emballage (16, 17) orientées latéralement d'une taille correspondante.

6. Dispositif selon la revendication 4 ou l'une quelconque des autres revendications,
**caractérisé en ce que** les leviers de support (55, 56) sont logés sur les disques rotatifs (53, 54) au moyen d'un coussinet de pivotement (57) excentré.
